# FASCICULE DE BREVET EUROPEEN

(11) **EP 2 211 143 B1**
(45) Date de publication et mention de la délivrance du brevet: **08.08.2018**
(21) Numéro de dépôt: 10151238.2
(22) Date de dépôt: 20.01.2010
(51) Int. Cl.: G01C 19/574

(54) **GYROMETRE A STRUCTURE PLANAIRE MICRO-USINEE, A DETECTION HORS PLAN PAR JAUGE DE CONTRAINTE**
Planarer mikromechanischer Kreisel mit Messung ausserhalb der Ebene mittels Dehnungsmesser
Micromachined planar gyrometer with an out-of-plane detection by strain gauge

(30) Priorité: 23.01.2009 FR 0950432
(43) Date de publication de la demande: 28.07.2010
(73) Titulaire: Commissariat à l'Énergie Atomique et aux Énergies Alternatives, 75015 Paris (FR)
(72) Inventeur: ROBERT, Philippe, 38000, GRENOBLE (FR)
(74) Mandataire: Ilgart, Jean-Christophe

(56) Documents cités:
- EP-A- 1 840 582
- EP-A- 2 008 965
- US-B1- 6 487 864
- XINXIN LI ET AL: "A Microgyroscope With Piezoresistance for Both High-Performance Coriolis-Effect Detection and Seesaw-Like Vibration Control" JOURNAL OF MICROELECTROMECHANICAL SYSTEMS, IEEE SERVICE CENTER, PISCATAWAY, NJ, US, vol. 15, no. 6, 1 décembre 2006 (2006-12-01), pages 1698-1707, XP011151351 ISSN: 1057-7157

## Description

### DOMAINE TECHNIQUE ET ÉTAT DE LA TECHNIQUE ANTÉRIEURE

L'invention concerne le domaine des micro-capteurs, notamment en silicium, par exemple les capteurs inertiels, notamment des gyromètres.

Elle trouve application dans des domaines variés, tels que l'automobile, la téléphonie mobile ou l'avionique.

De manière connue, les capteurs résonants peuvent être réalisés en technologie de volume, auquel cas l'élément sensible du capteur est réalisé sur toute l'épaisseur d'un substrat en silicium ou en quartz, en utilisant des gravures humides ; une telle technique est décrite dans le document FR 2 763 694.

Le document EP-1 626 282 décrit un gyromètre apte à détecter un mouvement selon un plan perpendiculaire au plan du dispositif.

Un tel dispositif n'est pas apte à détecter une rotation autour d'un axe situé dans son propre plan.

Le document EP 1 840 582 A divulgue un gyromètre pour détecter une rotation autour d'un premier axe, comprenant une structure à deux masses vibrantes distantes d'un deuxième axe, qui est un axe de torsion, et reliées à cet axe par un bras de liaison par l'intermédiaire de poutres.

Les masses et le bras de liaison s'étendent dans le plan du substrat qui est perpendiculaire au premier axe. Le bras de liaison est connecté par des moyens d'ancrage au substrat par l'intermédiaire d'un bras de torsion/flexion permettant la flexion de la structure dans le plan du substrat.

La structure est pourvue d'une jauge de contrainte constituée d'une poutre vibrante suspendue entre le bras de liaison et le substrat fixe pour la détection d'une torsion dudit deuxième axe. Le gyromètre est fabriqué de sorte à présenter au moins deux zones d'épaisseurs différentes correspondant respectivement à l'ensemble masses-bras de liaison et à la jauge de contrainte, une autre zone d'épaisseur pouvant être également formée en correspondance avec les bras de torsion.

Le document US 6 761 068 B1 décrit un gyromètre à structure planaire usinée dans un substrat, permettant de détecter une rotation autour d'un axe parallèle au plan du substrat. Le gyromètre comprend deux masses reliées, par l'intermédiaire de deux bras de liaison, à l'axe de sensibilité. La détection de la force de Coriolis se fait donc hors du plan et peut comprendre une détection à jauges piézorésistives placées sur des bras de torsion reliant les bras de liaison au substrat.

L'invention vise donc à proposer un nouveau type de dispositif de type gyromètre, permettant de réaliser une détection autour d'un axe situé dans son propre plan.

### EXPOSÉ DE L'INVENTION

L'invention propose un nouveau type de capteur, réalisé en technologie planaire, permettant de détecter un effort hors plan appliqué à une masse mécanique libérée, et mettant en oeuvre une détection par une ou plusieurs jauges suspendues, par exemple de type piézorésistive ou résonateur (poutre ou diapason).

Ce capteur selon l'invention permet de réaliser un gyromètre. Il permet en particulier une détection différentielle.

Il permet d'optimiser séparément les formes, matériaux et épaisseurs de la partie mobile (masse inertielle) et de la jauge utilisée pour la détection et la mesure de la contrainte.

Plus précisément, l'invention, selon la revendication 1, a pour objet un dispositif de type gyromètre, pour détecter une rotation autour d'un premier axe (Z), ce dispositif étant réalisé à partir d'un substrat ou réalisé dans un substrat ou dans la surface ou la zone superficielle d'un substrat ou compris dans un substrat, et comportant :
a) Une première zone, dite zone épaisse, présentant une première épaisseur et comportant:
   - au moins une masse, définissant, au repos, un plan, disposée à distance d'un deuxième axe de rotation contenu dans ce plan, cette masse étant apte à être mise en vibration dans ce plan, perpendiculairement au premier axe de rotation,
   - au moins deux bras de liaison pour relier ladite masse audit deuxième axe de rotation, ou à des moyens alignés au moins en partie avec le deuxième axe de rotation,
b) des moyens pour mettre en vibration ladite masse dans son plan,
c) une deuxième zone, de deuxième épaisseur, formant, pour au moins un des bras, au moins une liaison avec le substrat pour une rotation autour dudit deuxième axe de rotation, cette deuxième zone étant d'épaisseur inférieure ou égale à celle de la première zone ; la liaison formée avec le substrat peut être de type pivot ou charnière,
d) une troisième zone, dite zone mince, d'épaisseur plus faible que celle de la deuxième zone, formant au moins une jauge de contrainte de type suspendue, pour la détection du mouvement de rotation autour dudit deuxième axe de rotation.

De préférence, cette troisième zone :
- s'étend dans un plan parallèle au plan du substrat et ne contenant pas l'axe de rotation,
- s'étend dans un plan perpendiculaire au deuxième axe de rotation,
- est reliée, d'une part, à l'une des première zone et deuxième zone et, d'autre part, au substrat.

La deuxième zone est plus épaisse que la troisième zone de manière à ce que le deuxième axe rotation soit positionné au-dessus ou au-dessous du point d'application de la contrainte sur la jauge.

Le fait que la deuxième zone soit d'épaisseur plus faible que la première zone permet d'assurer une faible raideur qui favorise la rotation et rapproche l'axe de rotation du point d'application de la contrainte, ce qui permet de favoriser un effet bras de levier .

La troisième zone est de préférence la plus mince possible afin de garantir un optimum de sensibilité (plus cette zone est mince plus la contrainte est importante pour une largeur donnée).

La première et/ou la deuxième zone peuvent être formées par des matériaux semi-conducteurs et/ou conducteurs et/ou isolants. La première et la deuxième zone peuvent être formées par des matériaux identiques, ou différents l'un de l'autre.

La première zone peut avoir une épaisseur strictement supérieure à celle de la deuxième zone, qui a elle même une épaisseur strictement supérieure à celle de la troisième zone, comportant la ou les jauges de contraintes.

L'épaisseur de la troisième zone peut être inférieure ou égale à la moitié de l'épaisseur de la deuxième zone.

Un tel dispositif permet de réaliser la détection d'une rotation imposée autour du premier axe, situé dans le propre plan du dispositif lui-même. La détection effectuée est celle d'un mouvement hors de ce plan, autour du deuxième axe de rotation. Ce mouvement autour de ce deuxième axe de rotation résulte des forces de Coriolis, qui sont elles-mêmes induites par la combinaison de la rotation initiale, imposée à l'ensemble du dispositif, et de la vibration de chaque masse dans son propre plan.

Un tel dispositif peut être réalisé sous la forme d'un capteur MEMS de type de surface, formé dans un substrat, avantageusement en matériau semi-conducteur, par exemple en silicium. Le dispositif lui-même peut donc être réalisé en matériau semi-conducteur, là encore par exemple en silicium ou en SiGe.

Dans un premier mode de réalisation particulier, la première zone comporte deux masses, chacune à distance du deuxième axe de rotation.

Ces deux masses peuvent avoir un deuxième axe de rotation qui est commun, et qui est confondu avec le premier axe de rotation. En particulier, chacun des deux bras peut relier chacune des deux masses audit deuxième axe de rotation commun.

Dans un tel dispositif, au moins deux jauges peuvent être prévues pour la détection du mouvement de rotation, ces deux jauges étant montées en différentiel. Un tel montage différentiel peut d'ailleurs s'appliquer aux autres modes de réalisation de l'invention.

En variante, les deux masses peuvent avoir des deuxièmes axes de rotation (H, H') différents l'un de l'autre, parallèles entre eux et au premier axe de rotation, la première zone comportant au moins quatre bras, dont deux bras pour relier chaque masse à son deuxième axe de rotation.

Un tel dispositif peut en outre comporter des moyens pour coupler les deux masses en opposition de phase, suivant le mode d'excitation.

Un dispositif selon cette variante peut comporter au moins une jauge pour la détection du mouvement de rotation de chaque masse.

Par exemple, la ou les jauge (s) de contrainte est en un matériau piézorésistif tel que du silicium mono-cristallin ou poly-cristallin, ou comporte des nanofils de silicium ou des nanotubes de carbones, ou du SiGe mono-cristallin ou poly-cristallin.

Des nanofils, en particulier des nanofils en silicium, sont des structures de forme allongée suivant une direction, ayant une longueur suivant cette direction. Les dimensions transverses, dans une section perpendiculaire à cette direction sont très inférieures à cette longueur. Ces dimensions transverses sont typiquement inférieures à 100 nm, préférentiellement inférieures à 50 nm ou 40 nm et avantageusement inférieures à 20 nm. Des nanofils orientés suivant une direction X peuvent être obtenus en gravant une poutre de silicium suivant des directions transverses Y et Z, ou par croissance d'un nanofil, par exemple par dépôt SLV catalysé.

La ou les jauge(s) de contrainte peuvent comporter un résonateur de détection, comportant au moins une lame vibrante, un moyen d'excitation et un moyen de détection de la vibration.

L'excitation de la lame vibrante et/ou la détection de la résonance peut se faire par des moyens électrostatiques par le biais d'au moins une électrode disposée, par rapport à la lame vibrante, dans la direction de vibration.

La détection de la résonance peut également se faire par le biais de moyens piézorésistifs disposés sur la lame vibrante.

Quel que soit le mode de réalisation de l'invention, la ou les jauges de contrainte et la première zone peuvent être toutes deux situées du même côté par rapport à un plan commun, plan inférieur de la première zone par rapport au substrat. La première zone peut être située entre un plan supérieur (N1) et un plan inférieur (N2), l'axe (Z,H, H') de rotation étant dans un plan parallèle à ces deux plans.

Avantageusement, le ou les points d'applications (P) des contraintes produites sur chacune des jauges est dans un plan qui est parallèle au plan contenant l'axe (Z, H, H') de rotation et qui est perpendiculaire à chacun des plan supérieur (N1) et inférieur (N2).

Un tel dispositif peut comporter une seule jauge par bras de liaison, le point d'application des contraintes sur cette jauge étant dans un plan confondu avec le plan passant par l'axe de rotation, ou différent de ce plan.

En variante, un tel dispositif peut comporter plusieurs jauges par bras de liaison, les points d'application des contraintes sur ces jauges étant dans des plans parallèles, différents de celui contenant l'axe de rotation.

L'invention a également pour objet un procédé de fabrication d'un dispositif selon l'invention, comportant la réalisation d'une première zone, d'une deuxième zone, et d'une troisième zone telles que défini ci-dessus.

L'ensemble peut être obtenu par gravure d'un substrat en matériau semi-conducteur. De préférence, le substrat est un substrat de type SOI, et la gravure est réalisée dans la couche superficielle de ce substrat.

### BRÈVE DESCRIPTION DES DESSINS

- Les figures 1A à 1F représentent, en vue de face et en coupe, un capteur de type gyromètre selon l'invention, planaire, avec jauge de contrainte gravée,
- la figure 2A représente, un gyromètre selon l'invention, de type planaire, avec jauges de contraintes montées en différentiel ou en opposition,
- la figure 2B représente un schéma d'un pont de Wheastone,
- la figure 2C représente une vue en coupe du dispositif de la figure 2A.
- la figure 2D représente une partie d'une variante du dispositif de la figure 2A.
- les figures 3A et 3B représentent, en vue de face et de dessus, encore une variante d'un dispositif selon l'invention, avec axe sensible dans le plan, et à couplage fort en excitation,
- les figures 3C et 3D représentent des variantes d'une partie du dispositif des figures 3A et 3B,
- les figures 4A-4G représentent un procédé de réalisation d'un dispositif selon l'invention.

### EXPOSÉ DÉTAILLÉ DE MODES DE RÉALISATION PARTICULIERS

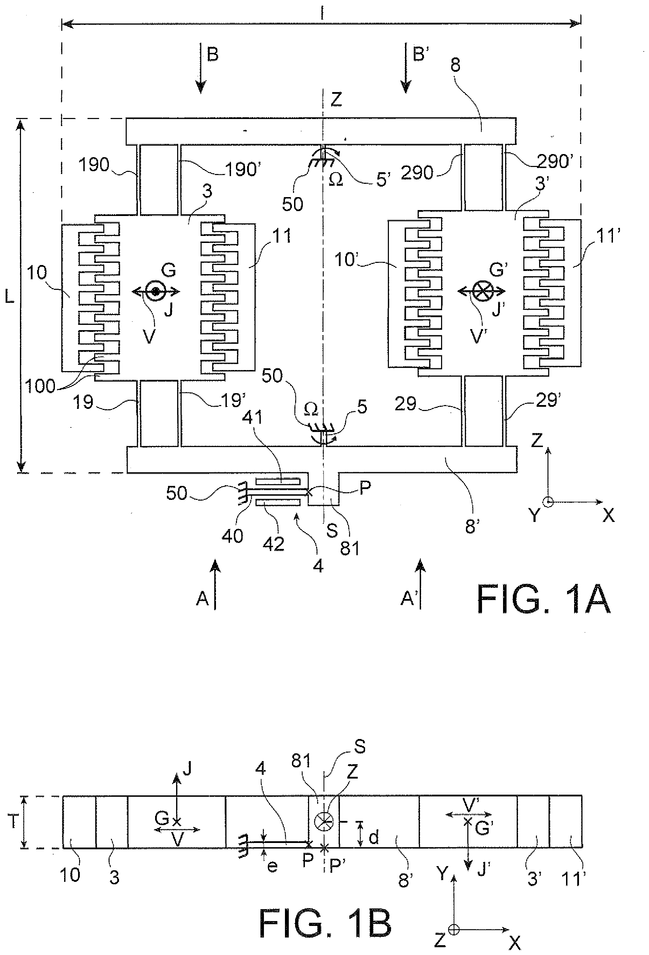

Différents modes de réalisation sont illustrés par les figures 1A à 3D dans lesquelles la référence à un même élément est commune aux différentes figures.

Un premier mode de réalisation de l'invention concerne un dispositif de type gyromètre illustré en figures 1A (vue de dessus) et 1B- 1F (vues en coupe).

Il s'agit d'un capteur de type gyromètre résonnant avec des jauges positionnées de façon à mesurer une rotation. Ce capteur est plan (plan XZ) et subit une excitation planaire dans son plan. Si le dispositif est soumis à une rotation autour d'un axe Z, disposé dans son plan, des forces de Coriolis l'entraînent en rotation autour de cet axe, mais le mouvement J correspondant à cette rotation est situé hors du plan du capteur.

On voit sur la figure 1A que ce capteur comporte un ensemble de deux masses 3, 3' et un ensemble de bras 8, 8', 19, 19', 29, 29', 190, 190', 290, 290', de liaison. Au repos, les bras et les masses sont tous situés dans le plan du dispositif. Des bras 8, 8' sont reliés à des zones 5, 5' formant pivot autour d'un axe Z sur lequel elles sont alignées. Cet axe est situé dans le plan de deux masses 3, 3'. C'est l'axe autour duquel le mouvement J correspondant à une rotation hors du plan du capteur va avoir lieu. La détection de ce mouvement hors plan J de ces masses est réalisé par une jauge de contrainte 4. En fait, les liaisons pivot sont d'une part reliées aux bras 8, 8', d'autre part reliées à une partie fixe 50 du dispositif. Cette partie fixe 50 peut être un substrat dans lequel le dispositif est réalisé.

On voit en figure 1B (vue en coupe de la figure 1A, suivant les flèches A, A' de la figure 1A) que ce capteur est planaire et comporte une première zone, de première épaisseur T, formant masse sismique, T étant comprise entre quelques 100 nm et quelques 10 µm, par exemple 5 µm. Dans le plan dans lequel s'étend le capteur, et qui contient l'axe Z, on définit le deuxième axe X, perpendiculaire à Z. Un troisième axe Y est choisi hors du plan du capteur, perpendiculairement au plan défini par X et Z.

L'épaisseur T, de même que toutes les épaisseurs mentionnées dans ce texte, est mesurée perpendiculairement au plan XZ du capteur.

Par ailleurs, le dispositif a, dans son plan XZ une extension L, suivant l'axe Z, qui peut être comprise entre quelques dizaines et quelques centaines de µm, par exemple entre 10 µm ou 50 µm et 100 µm ou 200 µm ou 500 µm et une largeur 1 suivant l'axe X, qui peut être comprise entre quelques dizaines et quelques centaines de µm, par exemple entre 10 µm ou 50 µm et 100 µm ou 200 µm ou 500 µm.

Cette première zone comporte les deux masses 3 et 3' qui sont symétriques l'une de l'autre par rapport à l'axe Z et à un plan S perpendiculaire au plan XZ du capteur (l'intersection entre ce plan S et le plan du capteur correspond à l'axe de direction Z) . Cette première zone comporte aussi l'ensemble de bras 8, 8', 19, 19', 29, 29', 190, 190', 290, 290' de liaison.

La deuxième zone comporte les zones ou parties 5, 5' du dispositif formant pivot pour les éléments (masses et bras de liaison) de la première zone. Chacune des masses 3, 3' est reliée, par les bras de liaison, à ces zones ou parties formant pivot, qui sont orientées selon l'axe Z, pour une rotation autour de cet axe. Dans l'exemple de la figure 1A, les parties formant pivot sont situées sensiblement à la moitié de chacun des bras 8, 8'.

La liaison entre masses sismiques 3, 3' d'une part et les zones pivots 5, 5' d'autre part, comporte d'abord deux bras principaux de liaison 8, 8'. Chacun de ces bras est allongé suivant la direction X, de manière à être sensiblement perpendiculaire à l'axe Z. Chacun de ces bras est disposé dans le plan XZ des masses lorsque celles-ci sont au repos. L'un des bras 8 est disposé, dans la vue de la figure 1A, au-dessus des deux masses 3,3', l'autre bras 8' en dessous de ces mêmes masses.

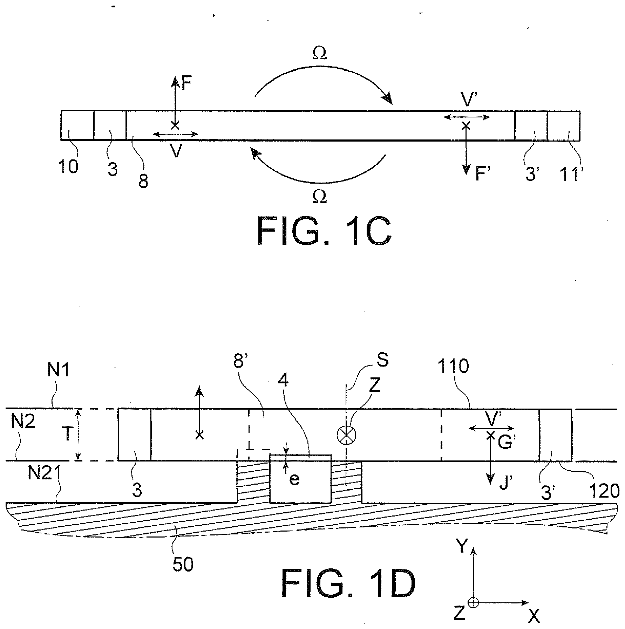

Des bras secondaires 19, 19', 190, 190', 29, 29', 290, 290', perpendiculaires aux bras 8, 8', relient ces derniers aux masses 3, 3'. Chacun de ces bras est donc allongé suivant la direction Z, de manière à être sensiblement perpendiculaire à l'axe X. Ces bras secondaires sont aussi dans le plan des masses lorsque celles-ci sont au repos. Chaque bras a une élasticité ou une flexibilité, dans la direction X perpendiculaire à l'axe pivot Z, lui conférant une fonction de ressort suivant cette même direction X, donc dans le plan de la figure 1A : chacun de ces bras, après avoir été sollicité suivant cette direction X, revient dans sa position de repos, illustrée sur la figure 1A, c'est-à-dire sensiblement parallèlement à la direction Z.

Au repos, l'ensemble des bras principaux et secondaires est dans un même plan, le plan XZ de la figure 1A. Deux des bras secondaires 19, 19', relient le bras principal inférieur 8' à la masse 3, deux autres bras secondaires 190, 190' relient le bras principal supérieur 8 à la même masse 3. Les quatre autres bras secondaires 29, 29', 290, 290' assurent la même fonction pour la masse 3'. Autrement dit, chacune des masses est avantageusement reliée aux bras principaux 8, 8' par quatre bras secondaires, deux bras secondaires pour chaque bras principal. Dans le mode de réalisation représenté il y a quatre bras secondaires pour chaque masse. Le nombre de bras secondaires pourrait être différent : il pourrait être supérieur à 4, mais il pourrait aussi être inférieur à 4. Par exemple on peut avoir un seul bras qui relie le bras principal supérieur 8 à la masse 3, et un seul bras qui relie le bras principal inférieur 8' à la même masse 3, avec une disposition identique pour la masse 3' et les bras principaux 8, 8' (un seul bras secondaire entre chaque bras principal et la masse 3').

La première zone, de première épaisseur T, comporte donc les trois parties que sont les masses, les bras principaux de liaison et les bras secondaires de liaison. Cet ensemble est situé dans le plan du substrat, comme on le comprend d'après la figure 1B, sur laquelle seules sont visibles le bras principal 8', les moyens de détection 4 et une partie des masses 3, 3' et des peignes d'excitation 10, 11' (décrits plus loin). De préférence, les masses, les bras principaux et les bras secondaires ont tous la même épaisseur T. Celle-ci permet un mouvement hors plan (J, J') des masses 3, 3' (en fait : une rotation Ω autour de l'axe pivot Z) tout en évitant une flexion des bras de liaisons 8, 8' (flexion perpendiculairement au plan de la figure 1A pour la position de repos représentée) qui fausserait la mesure.

Un tel dispositif selon l'invention comporte en outre des moyens pour mettre les masses 3,3' en mouvement ou en vibration dans le plan XZ.

Selon le mode de réalisation illustré, ces moyens comportent des moyens électrostatiques qui vont agir en coopération avec les masses. Les masses peuvent être conductrices. Si elles sont par exemple en Si, la conductivité de ce matériau est suffisante pour assurer une interaction électrostatique avec les peignes. De préférence le dopage du Si est alors supérieur à 10¹⁵ at/cm³.

De tels moyens électrostatiques comportent par exemple un ou plusieurs peignes capacitifs 10, 10', 11, 11', associé à chacune des masses. Chaque peigne présente des dents, chaque dent s'étendant suivant la direction X. Sur chaque masse 3, 3' sont également réalisées un ou des peignes, ou une ou des rangées de dents latérales 100, chaque dent 100 s'étendant là aussi suivant la direction X en position de repos du dispositif. Chacun de ces peignes ou rangées s'étend parallèlement à l'axe Z. Chaque rangée de dents de chaque masse 3, 3' est associée à l'un des peignes capacitifs 10, 11, 10', 11' de sorte qu'une dent du peigne capacitif soit disposée entre deux dents voisines de chaque peigne de la masse. En figure 1A sont représentés deux peignes pour chaque masse ; en variante, un seul peigne par masse peut suffire.

Dans l'exemple de la figure 1A, chacune des deux masses 3, 3' comporte deux rangées de dents latérales 100, disposée chacune parallèlement à Z. De part et d'autre de chaque masse, dans le plan XZ, sont disposés deux peignes capacitifs 10, 11 (masse 3), 10', 11' (masse 3'), qui coopèrent avec cette masse pour lui conférer un mouvement vibratoire suivant la direction X (mouvement indiqué par « V », « V' » en figure 1A). Les bras secondaires, qui permettent de guider le mouvement, sont alors suffisamment fins suivant l'axe X de vibration des masses pour ne pas gêner ce mouvement.

Avantageusement, les vibrations des deux masses sont en antiphase, c'est-à-dire que les masses se retrouvent en même temps vers l'extérieur du capteur. Autrement dit, les deux masses se trouvent simultanément à une même distance dₛᵤₚ de l'axe Z, dₛᵤₚ étant supérieure à la distance qu'elles ont, par rapport à cet axe, lorsqu'elles sont en repos.

Inversement ces deux masses se trouvent à l'intérieur du capteur en même temps. Autrement dit, les deux masses se trouvent simultanément à une distance d_{inf} de l'axe Z, d_{inf} étant inférieure à la distance qu'elles ont, par rapport à cet axe, lorsqu'elles sont en repos.

En cours de fonctionnement, les masses 3, 3' sont mises en vibration V, V' suivant l'axe X, à l'aide des moyens décrits ci-dessus. Lors d'une rotation Ω du substrat 50 autour de l'axe Z, auquel est relié le dispositif par chacun des axes pivots 5, 5', des forces de Coriolis (telles que F = Ω ∧ V) apparaissent, pour emmener chacune des masses suivant l'axe Y, perpendiculaire à la direction X du mouvement de vibration appliqué à chacune de ces masses et perpendiculaire à la direction de l'axe de rotation Z.

Lorsque les mouvements vibratoires des deux masses sont en antiphase, les deux masses ont des mouvements de sens opposés suivant l'axe Y.

La mise en mouvement des masses 3, 3' suivant l'axe Y entraîne une mise en mouvement des bras secondaires et principaux, et en particulier une rotation de ces derniers autour des zones pivot 5, 5'. C'est cette rotation qui va pouvoir être détectée par les moyens 4 formant capteurs.

En effet, chaque partie 5, 5' de la deuxième zone, dite zone pivot, est reliée d'une part à l'un des bras 8, 8', d'autre part à une partie fixe du dispositif 50. Chacune de ces parties 5, 5' subit donc une torsion lors d'une mise en mouvement des masses suivant l'axe Y, sous l'action des forces de Coriolis. Dans le cas d'une accélération selon un axe perpendiculaire au plan, chacune des deux masses 3 et 3' impose aux bras de liaison 8 une force de même direction; il n'y a alors pas de torsion de la zone pivot 5, 5'. Le fait d'avoir deux ensembles de masses symétriques permet donc de différencier une rotation autour de l'axe Z d'une accélération suivant l'axe Y.

Dans la deuxième zone, chaque pivot 5, 5' peut avoir, par exemple, une épaisseur inférieure à celle de la première zone. De préférence encore, il a une largeur (mesurée suivant l'axe X) inférieure ou égale à celle des bras secondaires afin de faciliter le mouvement de rotation autour de l'axe pivot Z. Ces dimensions peuvent être déterminées par simulation, afin d'obtenir suffisamment de sensibilité, mais aussi de ne pas faire apparaître de modes parasites.

Au moins l'un des bras principaux, le bras 8' sur la figure 1A, a, dans le prolongement de la zone pivot 5 à laquelle il est relié, une extension 81. L'épaisseur de cette extension est supérieure ou égale à celle de la jauge 40. Cette épaisseur peut être la même que celle du bras 8 et celle des masses 3,3'. Cette extension est disposée dans le même plan que les masses et les bras, de préférence elle est disposée de manière symétrique au pivot 5 par rapport au bras 8', en d'autres termes elle est située, dans le plan de la figure 1A, du côté du bras 8' opposé au côté relié au pivot 5. Elle est orientée suivant l'axe pivot Z, de façon à ce qu'une rotation des masses 3,3' autour de l'axe Z induise une rotation du bras 8 et une rotation de l'extension 81 autour de l'axe Z. Les zones pivot sont, elles, en torsion, car reliées d'une part aux bras 8, 8', d'autre part au substrat 50.

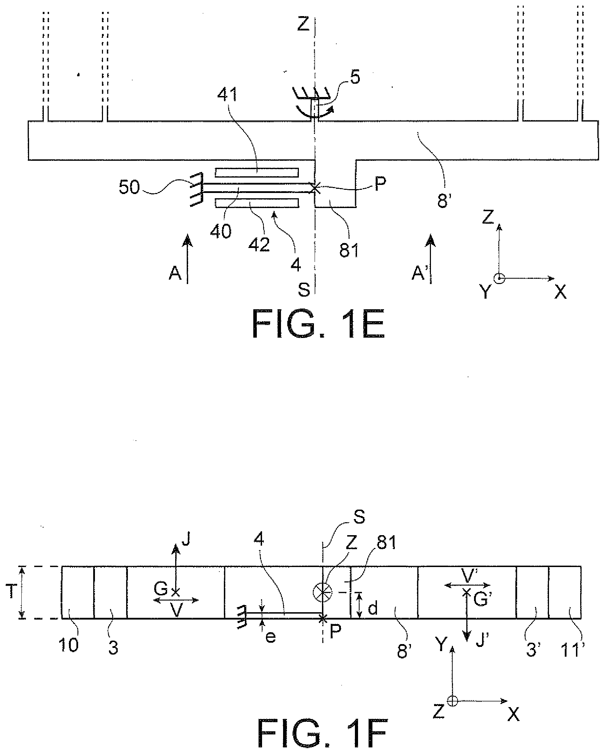

La position de l'extension 81 peut ne pas être symétrique du pivot 5 fixé sur le même bras. Par exemple, on peut avoir une disposition comme celle de la figure 1E, sur laquelle est représentée l'extension 81 décalée par rapport à l'axe Z, mais parallèle à celui-ci, de manière à ce qu'une partie au moins de cette extension soit tangente ou presque à cet axe Z. Ceci permet de positionner le point de contact de la jauge à la hauteur de l'axe Z comme expliqué ci-dessous.

Au moins une jauge de contrainte 4 est positionnée en contact avec au moins une des extensions 81 de façon à ce que la rotation de cette partie impose sur la jauge de contrainte 4 une force F dans le plan XZ du capteur. En variante, il est également possible de relier une jauge directement au pivot qui est en torsion - donc à 5 ou 5'.

La ou les jauges forment une troisième zone, de troisième épaisseur, strictement inférieure à l'épaisseur des zones pivot 5, 5'.

Il s'agit de préférence d'une jauge suspendue. Une jauge dite « suspendue » est maintenue en deux parties dites parties d'extrémités. La partie de la jauge, dite partie centrale, disposée entre ces deux parties d'extrémités est de longueur non nulle et n'est en contact avec aucun autre matériau, et notamment aucun des matériaux parmi ceux composant le capteur.

En général une telle jauge est de forme allongée suivant une direction, et de longueur, dite longueur de la jauge, très grande dans cette direction (devant chaque dimension mesurée dans une section perpendiculaire à ladite direction). Elle est maintenue en deux parties d'extrémités qui sont chacune de longueur faible ou très faible devant la longueur de la jauge ou de sa partie centrale.

Une telle jauge de contrainte est ici orientée selon l'axe X, de façon à être parallèle au plan du capteur et perpendiculaire à l'axe Z de l'extension 81. La direction de la jauge ou des jauges de contrainte 4 est donc normale au plan S contenant l'axe Z.

Comme on le voit sur la figure 1B, le point P de contact d'une jauge sur la partie mobile du dispositif, est proche de l'axe pivot Z.

De préférence, comme illustré sur les figures 1E et 1F, il est au même niveau que cet axe, c'est-à-dire dans le plan S passant par cet axe et perpendiculaire au plan XZ dans lequel le dispositif est contenu en position de repos (en fait : le plan de la figure 1A). Le point P est alors dit « à l'aplomb » de l'axe Z de rotation de la liaison pivot 5, ce qui permet de n'avoir, au premier ordre, qu'une contrainte axiale sur la jauge. Cette disposition du point d'application des contraintes sur la jauge peut notamment être obtenue avec un décalage de l'extension de 81 par rapport à un l'axe Z, comme déjà expliqué ci-dessus. Les figures 1E et 1F ne représentent qu'une partie du dispositif, le reste étant identique ou similaire au dispositif des figures 1A et 1B.

L'effet bras de levier entre le centre de gravité G, G' d'une masse 3, 3' l'axe de rotation Z et le point P d'application de la contrainte sur la jauge de contrainte 4 est d'autant plus important que le point G, G' est loin de l'axe Z et que le point P est proche de cet axe Z. Cependant, si le point P est confondu avec l'axe Z, il n'y a plus d'effet bras de levier.

Une rotation Ω de la masse sismique autour de l'axe Z se traduit par l'application d'une force F, suivant l'axe X, exercée sur la jauge de contrainte 4 (voir la figure 1A).

Préférentiellement l'épaisseur (suivant la direction Z, mais de préférence aussi suivant Y) e de la ou des jauges est comprise entre quelques 10 nm et quelques micromètres, par exemple 1 µm ou 2 µm ou 10 µm. Un exemple d'épaisseur est de 40 nm pour une jauge de contrainte du type nanofil ou 200 nm pour une jauge de contrainte suspendue en silicium polycristallin ou un résonateur de détection. De préférence, e est très petite devant d (e<<d, soit e<d/10 ou e<d/20), d étant la distance entre l'axe Z et le plan inférieur N2 (comme expliqué plus loin et comme illustré sur les figures 1A, 1B, 1E, 1F) du dispositif.

Dans le mode de réalisation de l'invention décrit par les figures 1A et 1B, 1E et 1F la jauge de contraintes 4 comporte un résonateur, qui peut vibrer en résonance dans le plan XZ du capteur.

Ce résonateur comporte une lame vibrante 40, un moyen d'excitation 41 et un moyen de mesure 42. Le moyen pour produire l'excitation de la lame vibrante peut être une électrode formant condensateur avec la lame vibrante 40 et reliée à un générateur de courant alternatif, non représenté sur la figure. Le résonateur vibre alors dans le plan XZ. Les électrodes concernées sont situées les unes par rapport aux autres dans un plan parallèle au plan du substrat 2. Le « gap », écart entre les électrodes, est par exemple de l'ordre de 50 nm à quelques µm, par exemple 1 µm ou 5 µm. Il peut être formé au moyen d'une photolithographie avec une largeur de gap contrôlée, avec une précision de l'ordre de la dizaine de nm ou de quelques dizaines de nm (par exemple : 10 nm ou 50 nm) à la centaine de nm ou quelques centaines de nm (par exemple : 100 nm ou 500 nm) .

Quel que soit le moyen d'excitation de la lame, lors de l'application d'une contrainte suivant la longueur de la jauge de contrainte 4, perpendiculaire à la direction de vibration de la lame 40, la fréquence de vibration de la lame va varier. Cette variation est mesurée par le moyen de mesure 42.

Le moyen de mesure peut être de type piézo-résistif (on mesure alors une variation de résistance), ou être une électrode 42. Dans ce dernier cas l'électrode permet de mesurer la fréquence de vibration de la lame vibrante au moyen de la mesure de la variation de la capacité formée entre la lame vibrante et l'électrode de mesure. L'électrode 42 est alors positionnée, relativement à la lame vibrante, dans la direction de vibration de la lame vibrante.

Dans le mode de réalisation de l'invention décrit en figure 1A (ou 1E), le moyen d'excitation 41 et le moyen de mesure 42 sont tous les deux capacitifs.

Dans un mode de réalisation de l'invention où les jauges de contraintes sont à résonateur de détection, comme illustré en figures 1A et 1B, ou 1E et 1F, la jauge est avantageusement formée par gravure, et disposée dans un plan parallèle au plan général du dispositif, mais passant sous l'axe Z de torsion. Une réalisation par dépôt est aussi faisable, auquel cas la jauge est disposée dans un plan parallèle au plan général du dispositif, mais passant au dessus de l'axe Z de torsion.

Alternativement, comme il sera décrit plus bas, les jauges de contraintes peuvent être du type piézo-résistif.

La figure 1C illustre schématiquement, dans une vue en coupe, suivant les flèches BB' de la figure 1A, le principe mécanique de ce mode de réalisation selon l'invention. On ne voit que le bras 8, qui cache le bras 8' et les autres parties du dispositif, sauf une partie des masses 3, 3' et des peignes 10, 11'. Les pivots 5,5' sont aussi cachés. Sont également représentées les forces F, F' appliquées aux extrémités du bras 8 et la rotation Ω. Les forces F, F' sont perpendiculaires au plan du dispositif, le dispositif subit donc bien des perturbations mécaniques hors de son plan, perturbations qui vont être détectées par les moyens formant capteur.

La figure 1D est, comme la figure 1B, une vue de dessous de la figure 1A, suivant les flèches A, A' de la figure 1A. Mais, sur cette figure 1D, est également représenté le substrat 50 auquel est relié le dispositif selon l'invention, d'une part par les zones 5, 5' formant pivot, et d'autre part par une extrémité de la jauge 4.

On voit bien sur cette figure que le dispositif comporte une face supérieure 110 (ou première face) et une face inférieure 120 (ou deuxième face). La face supérieure 110 est dans un plan N1, la face inférieure 120 est dans un plan N2. N1 et N2 sont tous deux parallèles à un plan N21 défini par la surface du substrat 50. On voit donc que le plan N2 est compris entre le plan supérieur N1 et le plan N 21 de la plaquette. Les adjectifs « inférieur » et « supérieur » sont choisis à titre de commodité, mais n'expriment pas une position relative définitive de l'un des plans par rapport à l'autre. On peut aussi employer respectivement les expressions « première face » et « deuxième face » ou « premier plan » et « deuxième plan ». Dans le reste du présent texte, on désigne par « plan » du dispositif un plan moyen, situé entre les deux plans inférieur N2 et supérieur N1 ; ce plan moyen passe par chacune des masses lorsqu'elles sont en position de repos.

Les masses 3, 3' ainsi que les bras principaux et secondaires sont disposés entre les plans N1 et N2.

L'axe Z de rotation est lui aussi disposé entre ces deux plans, parallèlement à chacun d'entre eux.

Les parties constituant la deuxième zone, il s'agit en fait des parties formant pivots 5, 5', sont elles aussi disposées entre ces deux plans. Avantageusement, l'axe Z et les centres de gravité G et G' des deux masses 3, 3' sont disposés dans un même plan, lui aussi parallèle aux deux plans N1 et N2. Cette disposition est avantageuse car elle évite une sensibilité aux accélérations transverses.

Enfin, on voit que la jauge 4 est disposée à proximité du plan inférieur N2. De préférence, cette jauge et les masses 3,3' sont disposés d'un même côté du plan inférieur N2, par rapport au substrat 50.

Autrement dit, en figure 1D, la jauge et les masses 3,3' sont disposés en contact avec le plan N2, mais au-dessus due ce plan. Plus particulièrement, la jauge et les masses ont chacune un plan inférieur et un plan supérieur qui sont tous deux disposés parallèlement au plan du substrat, mais à des altitudes différentes suivant l'axe Y: pour les masses 3, 3', ces plans inférieurs et supérieurs sont confondus avec les plans N1 et N2. Dans le mode de réalisation illustrée sur la figure 1D, le plan N2 est également le plan inférieur de la jauge 4. N1 et N2 sont eux-mêmes perpendiculaires au plan de la figure 1D, et le substrat 50 est disposé en dessous du plan N2. Une telle disposition est compatible avec une réalisation de la jauge, comme d'ailleurs des autres parties du dispositif, par gravure. Les mêmes remarques s'appliquent si c'est une pluralité de jauges qui sont utilisées. En variante, la jauge peut être déposée à proximité du plan N1 qui en constitue alors le plan inférieur.

Un dispositif selon l'invention peut être réalisé en matériau semi-conducteur, par exemple en silicium monocristallin ou polycristallin ou encore dans une couche de SiGe, déposée sur un substrat en silicium ou en un matériau de type verre.

On comprend d'après la figure 1D qu'un dispositif selon l'invention peut être compris ou réalisé dans un substrat ou une plaquette 50. Il est alors réalisé dans le même matériau, par exemple de type semi-conducteur tel que l'un de ceux indiqués ci dessus, que le substrat ou la plaquette 50.

Une technique utilisée pour réaliser un dispositif selon l'invention est alors une technique de gravure du substrat ou de la plaquette 50, avec les étapes de masquage appropriées. Toutes les parties du dispositif peuvent alors être réalisées par gravure, y compris la troisième zone, celle dans laquelle la ou les jauges 4 sont définies. En variante, les jauges peuvent être réalisées par dépôt.

Ces remarques sur les matériaux pouvant être choisis pour réaliser un dispositif selon l'invention, la possibilité d'utiliser le substrat 50 pour réaliser ce dispositif et les techniques de réalisation, valent quel que soit le mode de réalisation, que ce soit celui qui a été décrit ci-dessus, ou ceux qui sont décrits ci-dessous en liaison avec les autres figures.

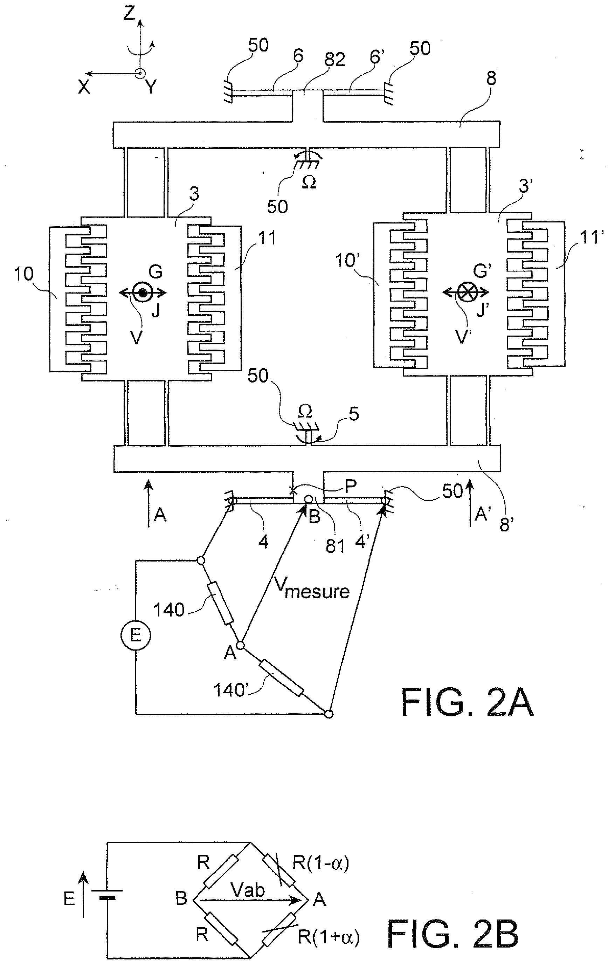

Un deuxième mode de réalisation de l'invention va être décrit en liaison avec les figures 2A et 2B. Il concerne encore un capteur de type gyromètre, du même type que celui du mode de réalisation précédent, les différences étant principalement liées aux jauges de contraintes.

Dans ce mode de réalisation, il y a quatre jauges de contraintes disposées de manière différentielle, deux pour chaque zone pivot ou pour chaque extension 81, 82 de chaque zone formant pivot. L'extension 82 et le pivot 5' ont la même disposition relative, par rapport au bras 8, que le pivot 5 et l'extension 81 par rapport au bras 8'. Dans l'exemple représenté en figure 2A, deux jauges 6,6' sont directement appliquées à la zone 82 d''extension du pivot 5' pour le bras principal supérieur 8. Chacune de ces deux jauges est par ailleurs fixée au substrat 50. Un mouvement du bras 8 impose donc sur chacune des jauges 6, 6' une force dans le plan du capteur. Ces deux jauges sont disposées de façon symétrique l'une de l'autre par rapport au plan S et par rapport à l'axe Z. Deux jauges 4, 4' sont appliquées à l'extension 81 de la zone 5 formant pivot pour le bras principal inférieur 8'. Chacune de ces deux jauges est par ailleurs fixée au substrat 50. Le bras principal inférieur 8' impose sur chacune des jauges 4, 4' une force dans le plan du capteur. Ces deux jauges 4, 4' sont disposées de façon symétrique l'une de l'autre par rapport au plan S et par rapport à l'axe Z; il en va de même pour les deux jauges 6, 6'.

Chaque jauge est par exemple du type dont la résistance varie en fonction de la contrainte appliquée. Une telle jauge est alors avantageusement en un matériau piezo-résistif, par exemple en silicium monocristallin ou poly-cristallin, ou elle est composée de nanotubes de carbones, ou de nano-fils de silicium, ... etc.

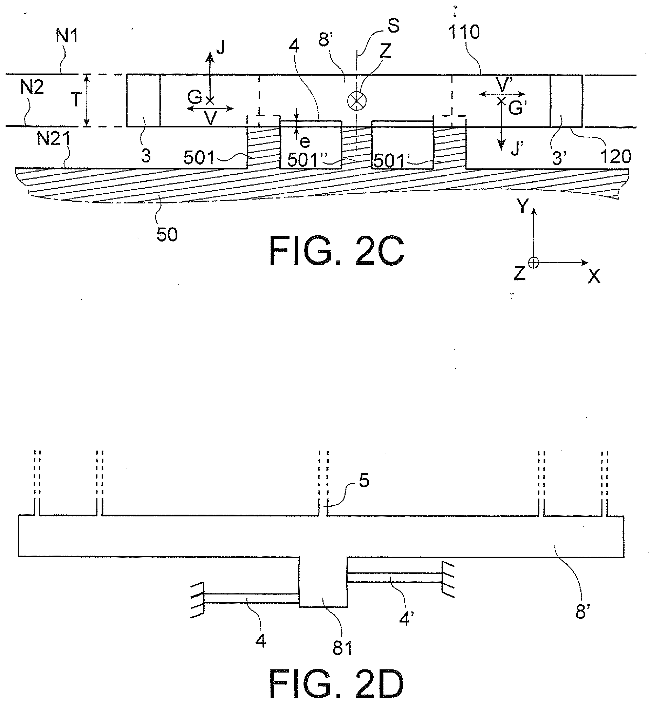

Au repos, les quatre jauges sont disposées au voisinage du plan formé par les masses sismiques 3, 3' et par les bras 8, 8'. Leur disposition exacte peut-être celle de la figure 2C, le plan N2 constituant le plan inférieur des jauges et des masses 3, 3'. En variante, les jauges sont disposées à proximité du plan N1, qui en constitue la partie inférieure.

Dans chaque paire de jauges, les jauges de contraintes peuvent être montées de façon symétrique l'une par rapport de l'autre par rapport à un plan, perpendiculaire au substrat, passant par l'axe de torsion Z. Mais d'autres dispositions sont possibles, comme illustré sur la figure 2D, qui représente seulement les deux jauges 4, 4', disposées de part et d'autre du plan, perpendiculaire au substrat, passant par l'axe de torsion Z, mais de manière non symétrique l'une de l'autre par rapport à ce plan. Cette disposition de la figure 2D est aussi applicable aux jauges 6, 6'. Une rotation Ω du dispositif et les forces de Coriolis appliquées aux masses 3, 3' résultent en une force f de traction sur l'une des deux jauges de chaque paire de jauges 6, 6' et 4, 4' et de compression sur l'autre jauge de cette même paire de jauges. La contrainte peut donc être mesurée de façon différentielle : c'est-à-dire que le capteur va être monté de façon à mesurer la différence entre la contrainte appliquée à l'une des jauges de chaque paire de jauges et celle appliquée à l'autre jauge de cette même paire de jauges.

Ainsi, il est possible de s'affranchir des variations de contraintes parasites (par exemple dues à la température), qui, identiques pour les deux jauges de chaque paire, s'annulent lors de la mesure différentielle; les deux points de mesure permettent donc d'obtenir une meilleure précision de mesure. On peut dire aussi que les deux jauges sont montées en différentiel.

Ce montage en différentiel est possible, notamment avec des jauges de contraintes de type résonateur de détection, en ajoutant au montage un appareillage électrique permettant de soustraire entre elles les deux fréquences des deux résonateurs : la variation de fréquence mesurée est alors proportionnelle à la contrainte vue par les jauges.

Dans le cas de jauges de contraintes en matériau à résistance variable, la mesure en différentiel peut se faire, pour chaque paire de jauges, au moyen d'un pont de Wheatstone.

La figure 2B représente le schéma de principe d'un pont de Wheatstone différentiel dont les 4 branches ont chacune une résistance de valeur R. Une mesure de tension V_{AB} entre deux points A et B opposés du pont permet de mesurer la différence 2αR entre les résistances disposées de part et d'autre de l'un de ces deux points, de valeurs R(1+α) et R(1-α) et qui varient en sens inverse l'une de l'autre.

Les deux jauges 4, 4' de la figure 2A peuvent chacune former un bras d'un pont de Wheatstone différentiel. On suppose qu'à chacune de ces deux jauges est associée une résistance R de valeur connue.

Pour former ce pont de Wheatstone différentiel, un point B de mesure de la tension est choisi entre les deux jauges 4 et 4', ici sur la portion 81 de matériau de la première zone prolongeant la zone pivot 5'. De par la position des deux jauges 4, 4' (de part et d'autre de l'extension 81) une torsion de la zone pivot 5' a pour conséquence des forces appliquées à ces deux jauges qui sont opposées.

Le pont de Wheatstone est formé avec deux autres résistances 140, 140', comme illustré sur la figure 2A. Un autre point A de mesure est positionné entre ces deux résistances.

Ainsi formé, le pont permet de remonter à une variation de résistance 2αR entre les résistances, variation de résistance qui est imposée aux jauges 4, 4' de contraintes par rotation du prolongement 81 autour de l'axe Z, induit par la torsion de la zone pivot 5. Cette méthode permet de s'affranchir des autres variations de résistance des jauges de contraintes, dues par exemple à une accélération ou à la dilatation thermique. L'amenée de courant se fait par exemple par une des jauges 4, et la sortie du courant par la deuxième jauge de contrainte 4'.

Dans le cas de deux paires de jauges 4, 4', 6, 6', comme illustré sur la figure 2A, on obtient deux mesures de variation de résistance, chaque paire de jauges pouvant être associée à un même pont de Wheatstone (dit pont complet). Avantageusement, seule une paire de jauges peut être utilisée, par exemple la paire 4, 4' ou la paire 6, 6'. En effet, la multiplication des jauges induit une division correspondante de la contrainte appliquée à chaque jauge.

Dans les deux premiers modes de réalisation de l'invention, la présence des bras de liaisons 8 et 8' ainsi que du ou des prolongements 81, 82 suivant l'axe de rotation permettent de discriminer une accélération suivant l'axe Y d'une rotation du capteur autour de l'axe Z. Dans les deux cas, une force selon Y est imposée aux masses.

Cependant, dans le cas d'une accélération suivant Y imposée à l'ensemble du dispositif, les forces imposées aux deux masses 3 et 3' sont identiques, de même valeur et de même direction. Il n'y a alors pas torsion de la zone de seconde épaisseur et donc pas de contrainte appliquée sur la jauge de contrainte. En effet :
- soit les bras 8 et 8', assurent, par leur rigidité suivant l'axe Y, une absence de mouvement suivant Y et donc une absence de rotation des masses,
- soit la rigidité des bras 8 et 8' est insuffisante, mais les forces imposées sur les masses étant identiques, le mouvement de rotation de la masse 3 est opposé à celui de la masse 3'; les contraintes apportées par ces mouvements sur la zone pivot s'annulent donc et il y n'a alors aucune rotation transmise au pivot.

La figure 2C est une vue de dessous de la figure 2A, suivant les flèches A, A' de la figure 2A. Mais, sur cette figure 2C, est également représenté le substrat 50 auquel est relié le dispositif selon l'invention, d'une part par les zones 5, 5' formant pivot, et d'autre part par les extrémités des jauges 4, 4'. En fait la liaison avec le substrat se fait avec des plots 501, 501', 501" qui font saillie par rapport à la surface N21 du substrat et obtenus par gravure de celui ci.

On voit bien sur cette figure que le dispositif comporte là encore une face supérieure 110 (ou première face) et une face inférieure 120 (ou deuxième face). La face supérieure 110 est dans un plan N1, la face inférieure 120 est dans un plan N2. Toutes les remarques faites ci-dessus en liaison avec la figure 1D et relatives aux positions relatives des différentes parties et de l'axe Z du dispositif par rapport à ces deux plans s'appliquent ici.

Mais on voit sur cette figure 2C que les deux jauges 4, 4' sont toutes deux disposées à proximité du plan N2. De préférence, ces jauges et les masses 3,3' sont disposés d'un même côté du plan inférieur N2, par rapport au substrat 50. Là encore, une telle disposition est compatible avec une réalisation des jauges, comme d'ailleurs des autres parties du dispositif, par gravure. Les mêmes remarques s'appliquent à une paire de jauges 6, 6' disposées à proximité de l'autre bras 8'.

Toutes les remarques faites ci-dessus en liaison avec la figure 1B et relatives à la position de chacun des points d'application des forces sur la jauge s'appliquent ici. En particulier il y a un intérêt à disposer les différents points d'application des jauges appliquées à un même bras principal dans différents plans parallèles entre eux et à un plan qui contient l'axe Z de rotation et qui est perpendiculaire à chacun des premier plan N1 et deuxième plan N2 du dispositif (ces deux plans N1 et N2 sont représentés sur la figure 2C).

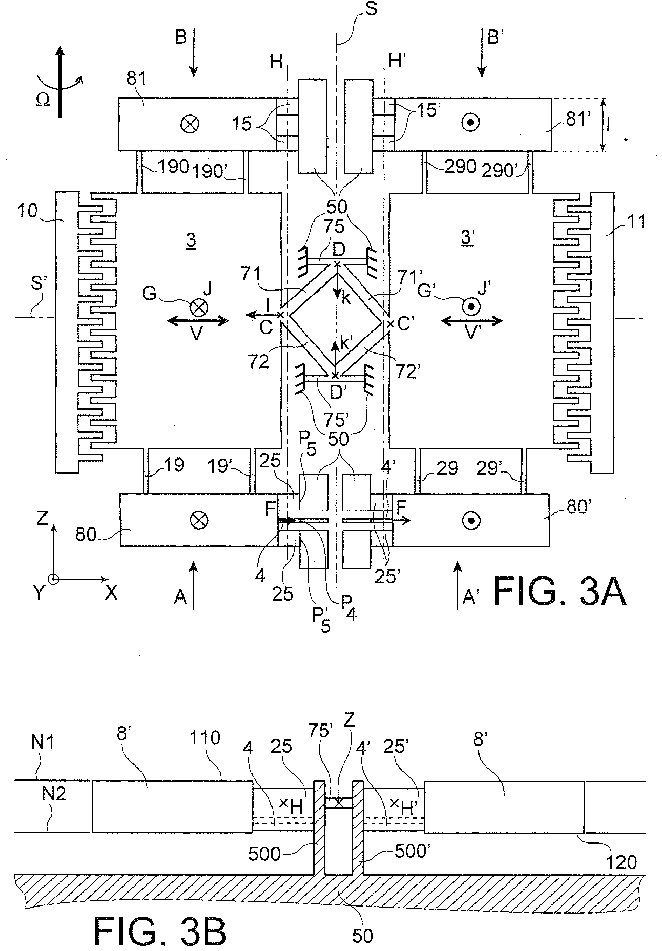

Un troisième mode de réalisation d'un dispositif suivant l'invention est illustré en vue de face en figure 3A.

Ce dispositif, à l'instar du dispositif décrit dans les modes de réalisation précédents de l'invention est formé de trois zones. Il a sensiblement les mêmes dimensions que celles indiquées ci-dessus, en épaisseur T, ainsi qu'en dimensions L et l dans le plan XZ.

Une première zone comporte deux masses 3 et 3', symétriques l'une par rapport de l'autre par rapport à un plan S perpendiculaire au plan du substrat. L'intersection entre ce plan et le plan du substrat forme un axe de direction Z. L'axe X et l'axe Y sont définis comme dans le premier mode de réalisation. L'épaisseur T de cette première zone est comprise entre quelques 100 nm et quelques 10 µm, par exemple 1 µm.

La première zone contient les deux masses ainsi que des bras principaux de liaisons 80, 80' et 81, 81' orientés suivant l'axe X et des bras secondaires 19, 19', 190, 190', 29, 29', 290, 290' orientés suivant l'axe Z.

Chacun des bras principaux 80, 80', 81, 81' est allongé suivant la direction X, de manière à être sensiblement perpendiculaire à l'axe Z. Chacun de ces bras est disposé dans le plan XZ des masses lorsque celles-ci sont au repos. Deux de ces bras sont disposés, dans la vue de face de la figure 3A, au-dessus des deux masses 3, 3' (un bras au dessus de chaque masse), les deux autres bras sont disposés en dessous de ces mêmes masses (un bras au dessous de chaque masse).

Les bras secondaires 19, 19', 190, 190', 29, 29', 290, 290', perpendiculaires aux bras principaux, relient ces derniers aux masses 3, 3'. Chacun de ces bras secondaires est donc allongé suivant la direction Z, de manière à être sensiblement perpendiculaire à l'axe X. Ces bras secondaires sont aussi dans le plan des masses lorsque celles-ci sont au repos. Chaque bras a une élasticité ou une flexibilité, dans la direction X perpendiculaire à l'axe pivot Z et dans le plan du capteur, lui conférant une fonction de ressort suivant cette même direction X, dans le plan de la figure 3A: chacun de ces bras, après avoir été sollicité suivant cette direction X, revient dans sa position de repos, illustrée sur la figure 1A, c'est-à-dire sensiblement parallèlement à la direction Z.

Au repos, l'ensemble des bras principaux et secondaires est dans un même plan, le plan XZ de la figure 3A. Deux des bras secondaires 19, 19', relient le premier bras principal inférieur 8 à la masse 3, deux autres bras secondaires 190, 190' relient le premier bras principal supérieur 80 à cette même masse 3. Les quatre autres bras secondaires 29, 29', 290, 290' assurent la même fonction pour la masse 3' et les bras principaux 8' et 80'. Autrement dit, chacune des masses est reliée aux bras principaux par quatre bras secondaires, deux bras secondaires pour chaque bras principal. Dans le mode de réalisation représenté il y a quatre bras secondaires pour chaque masse. Le nombre de bras secondaires pourrait être différent : il pourrait être supérieur à 4, mais il pourrait aussi être inférieur à 4.

La première zone du dispositif, de première épaisseur T, comporte les trois parties que sont les masses, les bras principaux de liaison et les bras secondaires de liaison. Cet ensemble est situé dans le plan XZ du substrat. De préférence, les masses, les bras principaux et les bras secondaires ont tous la même épaisseur T. Celle-ci permet qu'un mouvement hors plan (J, J') des masses 3, 3' puisse bien se traduire par une rotation Ω de chaque masse autour de son axe de rotation et d'éviter une flexion des bras principaux de liaisons 8, 8' qui fausserait la mesure.

Ce dispositif comporte en outre des moyens pour mettre en vibration les masses 3, 3' suivant l'axe X. Pour la description de ces moyens, on se reportera à la description ci-dessus du premier mode de réalisation. Ces moyens peuvent comporter ici une rangée de dents parallèle à la direction Z, sur un côté de chaque masse 3, 3', en fait le côté le plus extérieur par rapport à l'axe Z, formant un peigne. En face de chacun de ces peignes se trouve un autre peigne 10, 11. Les doigts de ces peignes sont interdigités avec les dents formées sur les bords des masses 3, 3'.

Une deuxième zone, ayant une deuxième épaisseur, inférieure ou égale à l'épaisseur de la première zone, est reliée d'un coté à la zone de première épaisseur et de l'autre au substrat, désigné globalement par la référence 50. Cette zone forme des charnières 15, 15', 25, 25' des bras principaux 80, 80', 81, 81' auxquels sont reliées les masses 3, 3'. Chaque masse peut être mise en rotation autour d'un axe de rotation défini par les charnières qui relient les bras principaux auxquels est reliée cette masse. De ce fait, l'axe de rotation de chaque masse 3, 3' n'est pas confondu avec l'axe Z, à la différence des premier et deuxième modes de réalisation déjà décrits. Les deux axes de rotation des masses 3, 3' sont désignés respectivement par H et H'. Ces axes sont parallèles à l'axe Z. Ils sont contenus dans le plan des couches ou des masses mobiles.

Les charnières 15 et 25, reliées à la masse sismique 3 par l'intermédiaire des bras de liaisons 80 et 81 sont alignées: l'axe de rotation permis par la charnière 15 est identique à celui de la charnière 25, il s'agit de l'axe de rotation H parallèle à Z pour la masse sismique 3. Les charnières 15' et 25' sont également alignées, de manière similaire, et forment un axe de rotation H' parallèle à Z pour la masses sismique 3'.

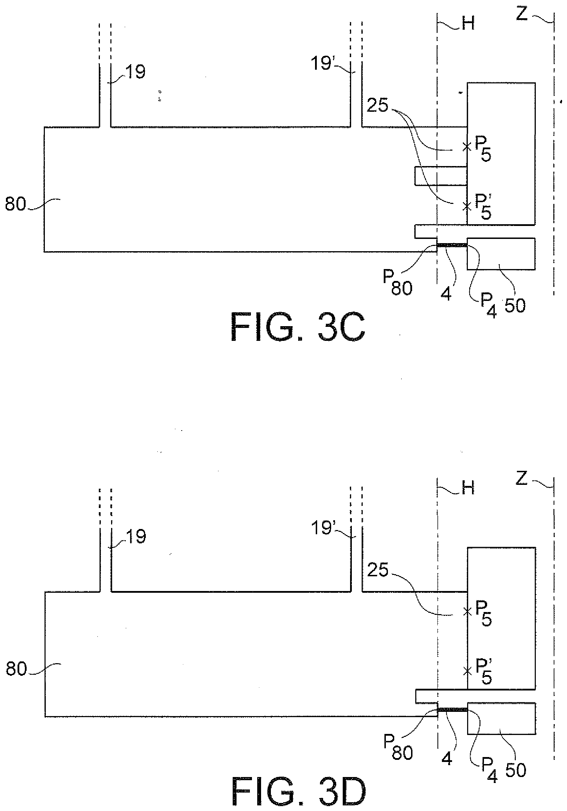

Les charnières ou zones de deuxième épaisseur, sont telles qu'elles n'autorisent aux bras principaux de liaison 80, 80', 81, 81' aucun autre mouvement qu'une rotation autour de l'axe H, H'. Dans le mode de réalisation décrit chaque zone charnière est composée de deux portions, chacune reliée d'un coté à un bras de liaison et de l'autre au substrat 50, bloquant les mouvements suivant X et Z, et n'autorisant que les rotations autour de H ou H'. L'avantage de ce mode de réalisation en deux portions parallèles est qu'il est possible de réaliser et de positionner la jauge 4 associée entre les deux portions 25, 25', 15, 15'. En outre, il est ainsi possible, comme illustré sur la figure 3A, d'isoler électriquement le point d'ancrage P₄ de la jauge 4 par rapport aux points d'ancrage P₅ P'₅ des charnières sur la zone 50 (en fait, les charnières ont des zones d'ancrage sur la zone 50 qui ne sont pas réduites à un point, mais l'expression « point d'ancrage » est utilisée de manière abrégée). Cette isolation peut être obtenue par gravure adaptée lors de la réalisation du dispositif. Ce qui est décrit là pour une seule jauge et une zone charnière peut être appliqué à toutes les zones charnières et à toutes les jauges du dispositif.

La figure 3C représente un autre mode de réalisation, dans lequel la jauge 4 est déportée latéralement par rapport à l'ensemble des deux charnières 25: la jauge n'est donc plus comprise entre les deux charnières. Là encore, on obtient une isolation électrique du point d'ancrage P₄ de la jauge 4 dans le substrat 50, par rapport aux points d'ancrage P₅ P'₅ des charnières, par exemple en gravant la zone 50 de manière adéquate. Là encore, ceci peut être appliqué à l'ensemble des jauges et des zones charnières.

Alternativement, il est possible de réaliser la limitation des mouvements des bras principaux de liaison suivant X et Z en formant des zones pivots larges suivant Z, empêchant ainsi tout mouvement des bras de liaisons suivant Z : par exemple, on remplace les deux charnières 15' qui relient le bras 81' à la zone fixe 50 par une charnière unique, de longueur suivant l'axe Z sensiblement égale à la largeur l_{81'} du bras 81' mesurée en projection sur l'axe Z. Elle peut être eux de longueur un peu inférieure, pour tenir compte du positionnement d'une jauge, comme illustré sur la figure 3D (qui représente le cas du bras 80). Dans ce cas, le positionnement de la jauge 4 par rapport à la charnière unique peut être obtenu en déportant la jauge de manière latérale. Là encore, on obtient une isolation électrique du point d'ancrage P₄ de la jauge 4 dans le substrat 50, par rapport au point d'ancrage P₅ de la charnière, par exemple en gravant la zone 50 de manière adéquate. Là encore, tout ceci peut être appliqué à l'ensemble des jauges et des zones charnières.

D'une manière générale, dans ce mode de réalisation, les points d'ancrage des jauges sur la partie fixe 50 sont isolées électriquement des points ou zones d'ancrage des charnières sur cette même partie fixe. Ceci peut être obtenu:
- soit par un positionnement centré de l'ancrage de chaque jauge sur la partie fixe, isolé de l'ancrage des charnières, comme c'est le cas sur la figure 3A,
- soit par un positionnement décentrée de l'ancrage de chaque jauge sur la partie fixe, également isolé électriquement des charnières, comme c'est le cas sur les figures 3C et 3D.

De préférence, le point d'appui d'un bras principal (par exemple le bras 80) sur la jauge correspondante est disposé dans un plan perpendiculaire aux plans N1 et N2 (c'est-à-dire un plan perpendiculaire à chacune des figures 3A, 3B, 3C), parallèle au plan S qui contient l'axe Z, et contenant l'axe H ou H'. Dans les modes de réalisation des figures 3C et 3D, ceci est obtenu par une gravure adéquate de l'extrémité du bras 80 qui est tournée vers la zone 50, ce qui permet de positionner le point P₈₀ d'appui du bras 80 sur la jauge 4 approximativement au-dessus, ou juste au-dessus de l'axe H.

Dans ce mode de réalisation, les axes H et H' sont « à l'intérieur » du capteur. C'est-à-dire que ces axes sont disposés entre deux axes parallèles à Z passant par les centres de gravités G et G'. Avantageusement, quand les masses sismiques ne sont pas en vibration, les axes H et H' passent par les points C et C' de la structure de couplage 70, qui sera décrite plus loin.

Une zone ayant une troisième épaisseur, inférieure strictement à l'épaisseur de la deuxième zone, forme une ou plusieurs jauges de contraintes 4, 4' orientées suivant l'axe X et fixées d'un coté au substrat fixe 50 et de l'autre côté à la première zone, en fait ici à deux des bras principaux (les bras 80 et 80').

Les types de jauge pouvant être utilisés sont ceux déjà décrits ci-dessus. Eventuellement une mesure par pont de Wheastone peut être mise en oeuvre, comme décrit ci-dessus en liaison avec les figures 2A et 2B. Mais il y a préférentiellement au moins deux jauges de contraintes 4, 4', disposées de façon symétrique par rapport au plan S ; au moins une jauge de contrainte est affectée à la mesure de la contrainte de chaque masse sismique. En effet, les axes de rotations H, H' n'étant pas confondus et les zones charnière permettant la rotation des deux masses étant différentes pour chacune des deux masses, les mouvements de chacune des deux masses sont préférentiellement mesurés séparément, malgré un mécanisme de couplage des deux masses qui sera décrit plus loin.

Dans ce mode de réalisation, les jauges de contraintes sont préférentiellement à résistance variable et avantageusement piézo-résistives de façon à faciliter un montage différentiel. Dans tous les cas un montage différentiel présente les avantages déjà expliqués ci-dessus. D'autres exemples de modes de détection ont été donnés en liaison avec le premier mode de réalisation.

Avantageusement, les vibrations des deux masses 3, 3' sont en antiphase, c'est-à-dire que les masses se retrouvent en même temps vers l'extérieur du capteur. Autrement dit, les deux masses se retrouvent simultanément à une distance de l'axe Z supérieure à la distance qu'elles ont, par rapport à cet axe, lorsqu'elles sont en repos.

Inversement ces deux masses se retrouvent à l'intérieur du capteur en même temps. Autrement dit, les deux masses se retrouvent simultanément à une distance de l'axe Z inférieure à la distance qu'elles ont, par rapport à cet axe, lorsqu'elles sont en repos.

Des moyens pour réaliser cette vibration en antiphase comportent une structure 70 de couplage des deux masses sismiques 3 et 3'. Cette structure permet qu'un mouvement selon l'axe X d'une première des deux masses 3 ou 3' résulte en un mouvement symétrique, par rapport au plan S, de la seconde des deux masses sismiques 3 ou 3'. Une telle structure 70 est décrite dans le cadre du mode de réalisation de la figure 3A et suivantes, mais peut être appliquée aux modes de réalisations qui ont été décrits précédemment (figures 1A - 2D), pour autant qu'il n'y ait pas de peigne électrostatique 10', 11 à l'intérieur de la structure.

Cette structure de couplage 70 est symétrique par rapport à au plan S de symétrie du capteur.

Cette structure 70 est de plus symétrique par rapport au plan S', perpendiculaire au plan du capteur, contenant la direction X du repère orthonormé et passant par les centres de gravité des deux masses sismiques 3 et 3'. Elle comprend entre autres deux bras d'ancrage 75 et 75', symétriques par rapport au plan S', orientés suivant X, et ayant une certaine flexibilité suivant l'axe Z. Ces structures d'ancrage 75 et 75' ont leurs centres respectifs D et D' dans le plan S et sont reliées au substrat 50, par exemple par des liaisons encastrées au substrat 50.

De façon symétrique par rapport aux plans S et S', quatre bras de transmission, 71, 72, 71', 72', flexibles selon l'axe X et l'axe Z, orientés en biais par rapport aux axes X et Z (par exemple à 45° par rapport à ces axes), relient les points C et C', intersection du bord intérieur des masses, opposé à celui portant le peigne latéral des masses 3 et 3' avec le plan S*, aux points D et D' des bras d'ancrage. Ces 4 bras de transmission forment un losange. Avantageusement, la distance entre les points D et D' est identique à la distance entre les points C et C', les bras de transmission formant ainsi un carré.

La structure de couplage est conçue de façon à ce qu'un mouvement de la masse 3, impose une force I sur la structure de couplage au point C, imposant un mouvement suivant l'axe X au point C des bras 71 et 72. Une telle action, en regard de l'orientation des bras de transmission 71 et 72 et de leur flexibilité suivant X et Z impose des forces K et K' suivant l'axe Z sur les bras d'ancrages respectifs 75 et 75'. Ces bras d'ancrages étant flexibles selon l'axe Z, les forces K et K' vont imposer une flexion aux centres D et D' des bras d'ancrage, les rapprochant ou les éloignant l'un de l'autre selon le sens des forces K et K' (et donc selon le sens du mouvement initial des masses 3, 3'). Dans l'exemple pris pour illustrer le fonctionnement les bras d'ancrages se rapprochent l'un de l'autre.

Le mouvement des bras d'ancrage 71', 72' va être symétrique de celui des bras 71, 72 par rapport au plan S. Ainsi, en transmettant un mouvement selon l'axe Z aux points D et D', ce mouvement impose un mouvement aux bras de transmission 71' et 72'. Compte tenu de l'orientation de ces derniers et de leur flexibilité suivant X et Z, ils vont imposer à la masse 3', au point C', une force I' et un mouvement selon l'axe X, opposés à la force I et au mouvement selon l'axe X imposés au point C par le mouvement de la masse 3.

Le fonctionnement de la structure de couplage 70, illustré dans le cas d'un mouvement éloignant la masse 3 du plan S, suit la même logique si le mouvement rapproche la masse 3 du plan S ou si le mouvement d'origine est appliqué à la masse 3'.

Préférentiellement, les masses sismiques sont mises en vibration suivant l'axe X de façon symétrique au moyen des moyens prévus à cet effet, les peignes capacitifs 10 et 11 dans l'exemple donné. La structure 70 assure la synchronisation entre les vibrations des deux masses. L'épaisseur de la structure de couplage peut être plus faible que celle des premières et deuxièmes zones, mais pas nécessairement. Cette épaisseur résulte d'un compromis entre longueur, largeur et épaisseur, tout en tenant compte des modes de résonance parasites.

En cours de fonctionnement, les masses 3, 3' sont mises en vibration V, V' suivant l'axe X, à l'aide des moyens décrits ci-dessus. Lors d'une rotation Ω d'un substrat 50 auquel est relié le dispositif par chacune des charnières, des forces de Coriolis (telles que F = Ω ∧ V) apparaissent, pour emmener chacune des masses suivant l'axe Y, perpendiculaire à la direction X du mouvement de vibration appliqué à chacune de ces masses et perpendiculaire à la direction de l'axe de rotation Z.

Lorsque les mouvements vibratoires des deux masses sont en antiphase, les deux masses ont des mouvements de sens opposés suivant l'axe Y.

La mise en mouvement des masses 3, 3' suivant l'axe Y entraîne une mise en mouvement des bras secondaires et principaux, et en particulier une rotation de ces derniers autour des charnières 5, 5', 15, 15'. C'est cette rotation qui va pouvoir être détectée par les moyens 4, 4' formant capteurs.

La figure 3B est une vue de dessous de la figure 3A, suivant les flèches A, A' de la figure 3A. Mais, sur cette figure 3B, est également représenté le substrat 50 auquel est relié le dispositif selon l'invention, d'une part par les zones 25, 25' formant charnières, et d'autre part par les extrémités des jauges 4, 4'.

On voit bien sur cette figure que le dispositif comporte une face supérieure 110 (ou première face) et une face inférieure 120 (ou deuxième face). La face supérieure 110 est dans un plan N1, la face inférieure 120 est dans un plan N2. Toutes les remarques faites ci-dessus en liaison avec la figure 1D et relatives aux positions relatives des différentes parties du dispositif et des axes par rapport à ces deux plans s'appliquent ici. En particulier, les deux axes H et H' sont disposés, tout comme l'axe Z, parallèlement aux deux plans N1 et N2, et entre ceux-ci.

Sont également représentées sur cette figure deux plots 500, 500' du substrat 50, qui font saillie par rapport à la surface N21 du substrat et qui peuvent avoir été définis par gravure du substrat originel. A ces plots vont être raccordés, d'une part les charnières 25, 25' et d'autres part les deux jauges 4, 4'. On voit également sur cette figure la trace des deux axes H et H' autour desquels les bras 80, 80' vont pouvoir être actionnés en rotation. Est également visible sur cette figure le bras 75' qui relie les deux bras 72,72' au substrat 50 (voir structure de la figure 3A). Ce bras 75' peut être fixé à deux plots similaires aux plots 500, 500', mais qui ne peuvent être visibles sur la figure 3B.

Comme sur la figure 2C on voit que les deux jauges 4, 4' sont toutes deux disposées à proximité du plan N2. De préférence, ces jauges et les masses 3,3' sont disposés d'un même côté du plan inférieur N2, par rapport au substrat 50. Là encore, une telle disposition est compatible avec une réalisation des jauges, comme d'ailleurs des autres parties du dispositif, par gravure. Les mêmes remarques s'appliquent à une paire de jauges 6, 6' disposées à proximité de l'autre bras 8'.

Les jauges sont électriquement isolées des charnières au point d'ancrage ; celles-ci sont disposées :
- soit dans une zone centrée de l'ancrage et isolée des charnières (par exemple par gravure),
- soit dans une zone décentrée de l'ancrage et isolée des charnières (par exemple par gravure),

Une vue similaire à celle de la figure 3B serait obtenue à partir du haut du dispositif, selon les flèches B, B' de la figure 3A.

Quel que soit le mode de réalisation de l'invention, une alimentation en tension permet d'alimenter les peignes pour conférer à chacune des masses un mouvement dans son propre plan.

En outre, le ou les capteurs utilisé(s) est relié à des moyens de traitement, par exemple un micro-ordinateur, qui va permettre de traiter les données, et de fournir des informations sur le mouvement de rotation subi par le dispositif autour de l'axe Z.

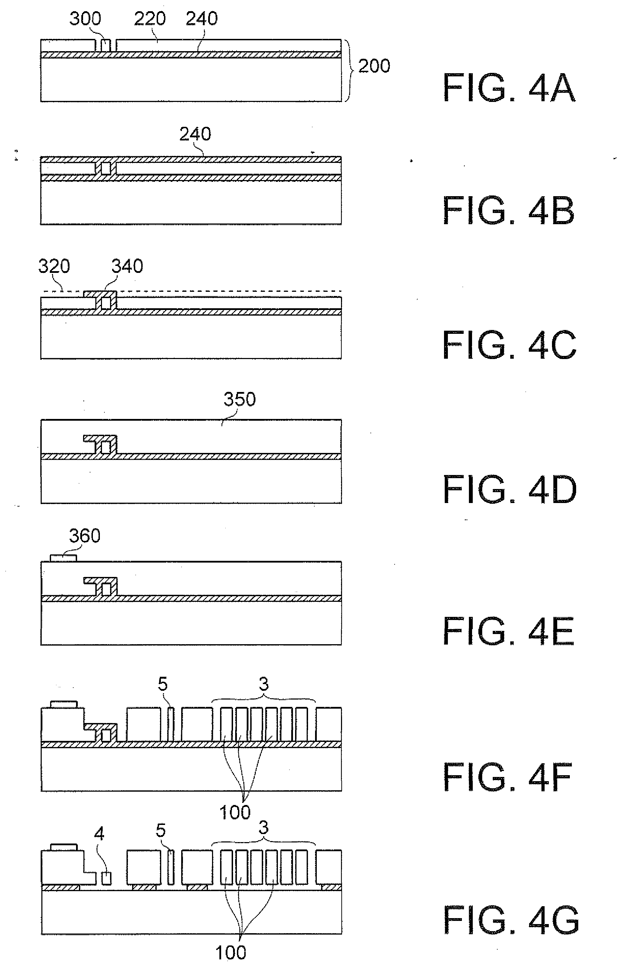

Un premier procédé de réalisation d'un dispositif selon l'invention va être décrit en lien avec les figures 4A-4G. Il correspond au cas d'une jauge gravée. La jauge est ici de type résonateur.

Ce procédé met en oeuvre une épitaxie de matériau semi-conducteur (ici du Silicium mais ce procédé peut aussi s'appliquer au cas du SiGe).

Un substrat SOI 200 est tout d'abord sélectionné (figure 4A). Par exemple, il comporte une couche 220 de Si de 0,5 µm d'épaisseur pour une couche 240 d'oxyde SiO₂ de 1 µm d'épaisseur.

Il est ensuite procédé à une lithographie puis une gravure de la couche 220 de Si pour définir une portion 300 du résonateur de détection (figure 4A). Cette partie est donc définie dans la couche superficielle de semi-conducteur, d'épaisseur faible. Alternativement, cette étape définit une portion de la jauge piézo-résistive.

La gravure est arrêtée sur la couche 240 de SiO₂. On procède ensuite au dépôt d'une couche (non représentée) de SiO₂, par exemple d'épaisseur 0,5 µm, suivi d'une planarisation avec arrêt sur la couche 220 de Si, puis à un dépôt 320 de SiO₂, par exemple d'environ 0.4 µm d'épaisseur (figure 4B).

On procède ensuite (figure 4C) à une lithographie par gravure, dans la couche 320 de SiO₂, d'une protection 340 au-dessus du résonateur, avec débordement sur au moins une partie des électrodes.

Une épitaxie 350 de Silicium est ensuite réalisée (figures 4D), sur la couche superficielle 220 initiale de semi-conducteur. L'épaisseur de la couche épitaxiée peut être supérieure à l'épaisseur de la couche 320, par exemple d'environ 4 µm.

Un dépôt métallique Ti/Ni/Au, puis une lithographie par gravure, sont ensuite réalisés (figure 4E) en vue de former des contacts 360.

Il est ensuite procédé à une lithographie et à une gravure anisotrope (par exemple : DRIE) de la structure mécanique (figure 4F), avec arrêt sur la couche de dioxyde SiO₂ 240. Cette étape permet de réaliser, au cours de la même opération, la ou les masses 3, 3' et les zones formant pivot ou charnière 5, 5', 15, 15', 25, 25', 35, 35', 52, 52', les bras principaux et secondaires sur une même épaisseur de matériau. On reconnaît aussi les dents 100 de la mase mobile 3.

Le dispositif est enfin libéré par gravure HF (humide ou vapeur) de la couche 240 (figure 4G), avec arrêt au temps. Sur la figure 6G, on voit en outre clairement la jauge 4, située en bas du dispositif.

Toute géométrie d'un dispositif selon l'invention peut être obtenue par adaptation du procédé qui vient d'être décrit. D'une manière générale, on procédera à :
- la gravure de la couche superficielle d'un SOI, pour y réaliser au moins une partie des moyens de détection ; il y a alors arrêt de la gravure sur la couche d'isolant enterrée du SOI,
- formation d'une couche épitaxiée de Si sur la couche superficielle gravée, avec éventuellement formation préalable d'une protection des moyens de détection,
- éventuellement formation de contacts sur cette couche épitaxiée, puis gravure de la structure mécanique (masses mobiles, axes, bras, etc....),
- libération de l'ensemble par gravure de la couche d'oxyde enterré.

Ce procédé peut être adapté au cas d'une jauge piézorésistive en supprimant les étapes de formation d'électrodes d'excitation et de détection. Il peut aussi être adapté au cas d'une jauge obtenue par dépôt.

Un dispositif selon l'invention peut comporter des moyens pour limiter les mouvements parasites des masses. Ces moyens peuvent comporter en particulier des éléments ressorts bloquant les mouvements en dehors de l'axe de rotation.

Selon un autre aspect, un dispositif selon l'invention (hormis celui de la figure 3) comporte une troisième zone formant jauge de contrainte, essentiellement perpendiculaire à l'axe de rotation contenu dans le plan des couches ou des masses mobiles ou aux charnières. En outre, dans tous les modes de réalisation, les jauges sont perpendiculaires à un axe de rotation contenu dans le plan de la structure et correspondant au deuxième axe de rotation, ou aux zones qui relient la partie mobile à la partie fixe. Ceci est possible du fait de l'utilisation d'épaisseurs différentes entre les deuxième et troisième zones, ce qui induit un axe de rotation décalé par rapport à l'ancrage des jauges et permet une sensibilité du dispositif à un déplacement hors plan.

## Revendications

1. Dispositif de type gyromètre, pour détecter une rotation autour d'un premier axe (Z), ce dispositif étant réalisé en technologie planaire, à partir d'un substrat (2, 50), et **caractérisé en ce qu'**il comporte :
a) une première zone, dite zone épaisse, située dans le plan du substrat, présentant une première épaisseur et comportant :
- au moins une masse (3, 3', 31, 32, 33), définissant, au repos, un plan, confondu avec le plan du substrat, contenant le premier axe (Z), cette masse étant disposée à distance d'un deuxième axe (Z, H, H') de rotation contenu dans ce plan, cette masse étant apte à être mise en vibration dans ce plan, perpendiculairement au premier axe de rotation (Z),
- au moins deux bras de liaison pour relier ladite masse audit deuxième axe de rotation (Z, H, H'),
b) des moyens pour mettre en vibration ladite masse (3) dans son plan,
c) une deuxième zone, de deuxième épaisseur, formant pour au moins un des bras (33, 8, 8', 80, 80', 81, 81') au moins une liaison (5, 5', 15, 15', 25, 25') avec le substrat (50) pour une rotation autour dudit deuxième axe de rotation (Z, H, H'), cette deuxième zone étant d'épaisseur inférieure ou égale à celle de la première zone,
d) une troisième zone, dite zone mince, d'épaisseur plus faible que celle de la deuxième zone, formant au moins une jauge de contrainte de type suspendue (4), pour la détection du mouvement de rotation autour dudit deuxième axe de rotation, cette troisième zone :
- s'étendant dans un plan parallèle au plan du substrat et ne contenant pas l'axe de rotation,
- s'étendant dans un plan perpendiculaire au deuxième axe de rotation,
- étant reliée, d'une part, à l'une des première zone et deuxième zone et, d'autre part, au substrat, l'épaisseur des différentes zones étant mesurée perpendiculairement au plan du substrat.

2. Dispositif selon la revendication 1, dans lequel la première zone comporte deux masses (3, 3'), chaque masse étant disposée au repos à distance d'un deuxième axe (Z, H, H') de rotation de cette masse, les deux distances entre chacune de ces deux masses et son deuxième axe (Z, H, H') de rotation étant égales.

3. Dispositif selon la revendication 2 :
- les deux masses ayant un deuxième axe de rotation (Z) commun, confondu avec le premier axe de rotation, chacun des deux bras (8, 8') reliant chacune des deux masses audit deuxième axe de rotation commun,
- ou bien, les deux masses ayant des deuxièmes axes de rotation (H, H') différents l'un de l'autre, parallèles entre eux et au premier axe de rotation, la première zone comportant au moins quatre bras (80, 80', 81, 81'), dont deux bras pour relier chaque masse à son deuxième axe de rotation.

4. Dispositif selon la revendication 3, les deux masses :
- ayant un deuxième axe de rotation (Z) commun, et le dispositif comportant au moins deux jauges (4, 4', 6, 6') pour la détection du mouvement de rotation, ces deux jauges étant montées en différentiel,
- ou bien les deux masses ayant des deuxièmes axes de rotation (H, H') différents l'un de l'autre, et le dispositif comportant en outre des moyens (70) pour coupler les deux masses en opposition de phase.

5. Dispositif selon l'une des revendications 3 ou 4, comportant au moins une jauge pour la détection du mouvement de rotation de chaque masse.

6. Dispositif selon l'une des revendications 1 à 5, la ou les jauge (s) de contrainte (4, 6) étant en un matériau piézorésistif tel que du silicium mono-cristallin ou poly-cristallin, ou des nanofils de silicium, ou du SiGe mono-cristallin ou poly-cristallin, ou des nanotubes de carbones.

7. Dispositif selon l'une des revendications 1 à 6, la ou les jauge (s) de contrainte (4, 6) comportant un résonateur de détection, comportant au moins une lame vibrante (40), un moyen d'excitation (41) et un moyen de détection de la vibration (42).

8. Dispositif selon la revendication 7, l'excitation de la lame vibrante (40) et/ou la détection de la résonance se faisant par des moyens électrostatiques par le biais d'au moins une électrode (41, 42) disposée, par rapport à la lame vibrante, dans la direction de vibration.

9. Dispositif selon l'une des revendications 7 ou 8, comportant des moyens piézorésistifs de détection de la résonance, disposés sur la lame vibrante.

10. Dispositif selon l'une des revendication 1 à 9, la ou les jauges de contrainte et la première zone étant toutes deux situées du même côté par rapport à un plan commun, plan inférieur (N2) de la première zone par rapport au substrat (50).

11. Dispositif selon l'une des revendications 1 à 10, la première zone étant située entre un plan supérieur (N1) et un plan inférieur (N2), l'axe (Z,H, H') de rotation étant dans un plan parallèle à ces deux plans.

12. Dispositif selon la revendication 11, le ou les points d'applications (P) des contraintes produites sur chacune des jauges (4) étant dans un plan qui est parallèle au plan contenant l'axe (Z, H, H') de rotation et perpendiculaire à chacun des plans supérieur (N1) et inférieur (N2) ou dans des plans qui sont parallèles au plan contenant l'axe (Z, H, H') de rotation et perpendiculaire à chacun des plans supérieur (N1) et inférieur (N2).

13. Dispositif selon la revendication 12, comportant une seule jauge par bras de liaison, le point d'application des contraintes sur cette jauge étant dans un plan, parallèle au plan contenant l'axe (Z, H, H') de rotation et perpendiculaire à chacun des plans supérieur (N1) et inférieur (N2), confondu avec le plan passant par l'axe de rotation, ou différent de ce plan.

14. Dispositif selon la revendication 13, comportant plusieurs jauges par bras de liaison, les points d'application des contraintes sur ces jauges étant dans des plans parallèles au plan contenant l'axe (Z, H, H') de rotation et perpendiculaires à chacun des plans supérieur (N1) et inférieur (N2), différents de celui contenant l'axe de rotation.

15. Dispositif selon l'une des revendications 1 à 14, l'épaisseur de la troisième zone étant inférieure ou égale à la moitié de l'épaisseur de la deuxième zone.

## Patentansprüche

1. Vorrichtung vom Typ Gyrometer zum Erfassen einer Drehung um eine erste Achse (Z), wobei diese Vorrichtung in Planartechnik ausgehend von einem Substrat (2, 50) ausgebildet ist und **dadurch gekennzeichnet ist, dass** sie enthält:
a) einen ersten Bereich, den sogenannten dickeren Bereich, der in der Ebene des Substrats liegt, eine erste Dicke aufweist und enthält:
- zumindest eine Masse (3, 3', 31, 32, 33), in die Ruhestellung eine Ebene definiert, die mit der Ebene des Substrats zusammenfällt, und die erste Achse (Z) enthält, wobei diese Masse von einer in dieser Ebene enthaltenen zweiten Drehachse (Z, H, H') entfernt angeordnet ist, wobei diese Masse dazu ausgelegt ist, in dieser Ebene senkrecht zur ersten Drehachse (Z) in Schwingung versetzt zu werden,
- zumindest zwei Verbindungsarme zum Verbinden der Masse mit der zweiten Drehachse (Z, H, H'),
b) Mittel, um die Masse (3) in ihrer Ebene in Schwingung zu versetzen,
c) einen zweiten Bereich mit einer zweiten Dicke, der für zumindest einen der Arme (33, 8, 8', 80, 80', 81, 81') zumindest eine Verbindung (5, 5', 15, 15', 25, 25') mit dem Substrat (50) für eine Drehung um die zweite Drehachse (Z, H, H') bildet, wobei dieser zweite Bereich eine Dicke hat, die geringer oder gleich der des ersten Bereichs ist,
d) einen dritten Bereich, den sogenannten dünneren Bereich, der eine geringere Dicke als der zweite Bereich hat, und zumindest eine hängend ausgeführte Dehnungsmesseinrichtung (4) zum Erfassen der Drehbewegung um die zweite Drehachse bildet, wobei dieser dritte Bereich:
- sich in einer Ebene parallel zur Ebene des Substrats erstreckt und nicht die Drehachse enthält,
- sich in einer Ebene senkrecht zur zweiten Drehachse erstreckt,
- einerseits mit einem aus erstem und zweitem Bereich und andererseits mit dem Substrat verbunden ist, wobei die Dicke der verschiedenen Bereiche senkrecht zur Ebene des Substrats gemessen wird.

2. Vorrichtung nach Anspruch 1, wobei der erste Bereich zwei Massen (3, 3') enthält, wobei jede Masse in der Ruhestellung von einer zweiten Drehachse (Z, H, H') dieser Masse entfernt angeordnet ist, wobei die beiden Abstände zwischen jeder dieser Massen und ihrer zweiten Drehachse (Z, H, H') gleich sind.

3. Vorrichtung nach Anspruch 2,
- wobei die beiden Massen eine gemeinsame zweite Drehachse (Z) haben, die mit der ersten Drehachse zusammenfällt, wobei jeder der beiden Arme (8, 8') jeweils eine der beiden Massen mit der gemeinsamen zweiten Drehachse verbindet,
- oder aber die beiden Massen zweite Drehachsen (H, H') haben, die sich voneinander unterscheiden, parallel zueinander und zur ersten Drehachse verlaufen, wobei der erste Bereich zumindest vier Arme (80, 80', 81, 81') aufweist, darunter zwei Arme zum Verbinden jeder Masse mit ihrer zweiten Drehachse.

4. Vorrichtung nach Anspruch 3, wobei die beiden Massen
- eine gemeinsame zweite Drehachse (Z) haben, und wobei die Vorrichtung zumindest zwei Messeinrichtungen (4, 4', 6, 6') zum Erfassen der Drehbewegung aufweist, wobei diese beiden Messeinrichtungen in Differenz geschaltet sind,
- oder aber die beiden Massen zweite Drehachsen (H, H') haben, die sich voneinander unterscheiden, wobei die Vorrichtung ferner Mittel (70) zum Koppeln der beiden Massen in Gegenphase enthält.

5. Vorrichtung nach einem der Ansprüche 3 oder 4, zumindest enthaltend eine Messeinrichtung zum Erfassen der Drehbewegung jeder Masse.

6. Vorrichtung nach einem der Ansprüche 1 bis 5, wobei der bzw. die Dehnungsmesseinrichtungen (4, 6) aus einem piezoresistiven Material, wie etwa monokristallinem oder polykristallinem Silicium, oder aus Nanodrähten aus Silicium, oder aus monokristallinem oder polykristallinem SiGe oder aus Kohlenstoffnanoröhrchen, bestehen.

7. Vorrichtung nach einem der Ansprüche 1 bis 6, wobei der bzw. die Dehnungsmesseinrichtungen (4, 6) einen Detektionsresonator mit zumindest einem Schwingbalken (40), einem Anregungsmittel (41) und einem Mittel zum Erfassen von Schwingung (42) enthalten.

8. Vorrichtung nach Anspruch 7, wobei die Anregung des Schwingbalkens (40) und/oder die Erfassung der Resonanz über elektrostatische Mittel mit Hilfe zumindest einer Elektrode (41, 42) erfolgt, die bezüglich des Schwingbalkens in Schwingungsrichtung angeordnet ist.

9. Vorrichtung nach einem der Ansprüche 7 oder 8, enthaltend piezoresistive Mittel zum Erfassen der Resonanz, die an dem Schwingbalken angeordnet sind.

10. Vorrichtung nach einem der Ansprüche 1 bis 9, wobei die Dehnungsmesseinrichtung bzw. Dehnungsmesseinrichtungen und der erste Bereich beide auf der gleichen Seite bezüglich einer gemeinsamen Ebene liegen, welche die untere Ebene (N2) des ersten Bereichs bezüglich des Substrats (50) ist.

11. Vorrichtung nach einem der Ansprüche 1 bis 10, wobei der erste Bereich zwischen einer oberen Ebene (N1) und einer unteren Ebene (N2) liegt, wobei die Drehachse (Z, H, H') in einer Ebene parallel zu diesen beiden Ebenen liegt.

12. Vorrichtung nach Anspruch 11, wobei die Stelle bzw. Stellen (P) zum Anlegen der erzeugten Spannungen an jede der Messeinrichtungen (4) in einer Ebene liegen, die parallel zur Ebene mit der Drehachse (Z, H, H') und senkrecht zu jeder der oberen (N1) und der unteren Ebene (N2) verläuft, oder in Ebenen liegen, die parallel zur Ebene mit der Drehachse (Z, H, H') und senkrecht zu jeder der oberen (N1) und der unteren Ebene (N2) verlaufen.

13. Vorrichtung nach Anspruch 12, enthaltend pro Verbindungsarm eine einzige Messeinrichtung, wobei die Stelle (P) zum Anlegen der Spannungen an diese Messeinrichtung in einer Ebene liegt, die parallel zur Ebene mit der Drehachse (Z, H, H') und senkrecht zu jeder der oberen (N1) und der unteren Ebene (N2) verläuft, die mit der Ebene zusammenfällt, die durch die Drehachse verläuft, oder von dieser Ebene verschieden ist.

14. Vorrichtung nach Anspruch 13, enthaltend pro Verbindungsarm mehrere Messeinrichtungen, wobei die Stellen zum Anlegen der Spannungen an diese Messeinrichtungen in Ebenen liegen, die parallel zur Ebene mit der Drehachse (Z, H, H') und senkrecht zu jeder der oberen (N1) und der unteren Ebene (N2) verlaufen, die sich von derjenigen unterscheiden, welche die Drehachse enthält.

15. Vorrichtung nach einem der Ansprüche 1 bis 14, wobei die Dicke des dritten Bereichs geringer oder gleich der halben Dicke des zweiten Bereichs ist.

## Claims

1. A device of the gyrometer type, for detecting a rotation around a first axis (Z), this device being realized in planar technology from a substrate (2, 50), **characterized in that** it comprises:
a) A first zone, called thick zone, located in the plane of the substrate, having a first thickness and comprising:
- at least one mass (3, 3', 31, 32, 33), defining, idle, a plane, merged with the plane of the substrate, containing the first axis, this mass being arranged at a distance from a second axis (Z, H, H') of rotation contained in this plane, this mass being able to be caused to vibrate in this plane, perpendicular to the first axis of rotation (Z),
- at least two connecting arms to connect said mass (3) to said second axis of rotation (Z, H, H'),
b) means for causing said mass to vibrate in its plane,
c) a second zone, of second thickness forming, for at least one of the arms (33, 8, 8', 80, 80', 81, 81'), at least one connection (5, 5', 15, 15', 25, 25') with the substrate (50) for a rotation around said second axis of rotation (Z, H, H'), this second zone having a thickness smaller than or equal to that of the first zone,
d) a third zone, called thin zone, with a thickness smaller than that of the second zone, forming at least one strain gauge of the suspended type (4), for detecting the rotational movement around said second axis of rotation, this third zone:
- extending in a plane parallel to the plane of the substrate and not containing the axis of rotation,
- extending in a plane perpendicular to the second axis of rotation,
- being connected, on one hand, to one of the first and second zones and, on the other hand, to the substrate, the thicknesses of the different zones being measured perpendicularly to the plane of the substrate.

2. Device according to claim 1, in which the first zone includes two masses (3, 3(), each mass being arranged, idle, at a distance from a second axis (Z, H, H') of rotation of this mass, the two distances between each of these two masses and its second axis (Z, H, H') of rotation being equal.

3. Device according to claim 2:
- the two masses having a second axis of rotation (Z) which they share, and which is combined or common with the first axis of rotation, each of the two arms (8, 8') connecting each of the two masses to said second common axis of rotation;
- or the two masses having two axes of rotation (H, H') different from each other, parallel to each other and to the first axis of rotation, the first zone comprising at least four arms (80, 80', 81', 81'), including two arms to connect each mass to its second axis of rotation.

4. Device according to claim 3, the two masses:
- having a second common axis of rotation (Z), and the device comprising at least two gauges (4, 4', 6, 6') for detecting the rotational movement, these two gauges being differential mounted;
- or the two masses having second axes of rotation (H, H') different from each other, and the device also including coupling means (70) coupling the two masses in anti-phase.

5. Device according to one of claims 3 or 4, including at least one gauge for detecting the rotational movement of each mass.

6. The device according to any of claims 1 to 5, said at least one strain gauge (4, 6) being made in a piezoresistive material such as monocrystalline or polycrystalline silicon, or of silicon nanowires, or of monocrystalline or polycrystalline SiGe, or of carbon nanotubes.

7. Device according to one of claims 1 to 6, the strain gauge(s) (4, 6) comprising a detection resonator, including at least one vibrating strip (40), an excitation means (41) and means for detecting said vibration (42).

8. Device according to claim 7, the excitation of the vibrating strip (40) and/or the detection of the resonance being done electrostaticaly via electrostatic means through at least one electrode (41, 42) arranged, in relation to the vibrating strip, in the direction of vibration.

9. Device according to one of claims 7 or 8, including piezoresistive means for detecting the resonance, arranged on the vibrating strip.

10. Device according to one of claims 1 to 9, the gauge (s) and the first zone both being situated on the same side in relation to a common plane, lower plane (N2) of the first zone in relation to the substrate (50).

11. Device according to claim 1 to 10, the first zone being situated between an upper plane (N1) and a lower plane (N2), the axis (Z, H, H') of rotation being in a plane parallel to these two planes.

12. Device according to claim 11, the point(s) of application (P) of the strains produced on each of the gauges (4) being in a plane which is parallel to the plane containing the axis (Z, H, H') of rotation and perpendicular to each of the upper (N1) and lower (N2) planes or in planes which are parallel to the plane containing the axis (Z, H, H') of rotation and perpendicular to each of the upper (N1) and lower (N2) planes.

13. Device according to claim 12, including a single gauge per connecting arm, the point of application of strains on this gauge being in a plane, parallel to the plane containing the axis (Z, H, H') of rotation and perpendicular to each of the upper (N1) and lower (N2) planes, combined with the plane passing through the axis of rotation, or different from that plane.

14. The device according to claim 13, including several gauges per connecting arm, the points of application of the strains on these gauges being in planes parallel to the plane containing the axis (Z, H, H') of rotation and perpendicular to each of the upper (N1) and lower (N2) planes, different from that containing the axis of rotation.

15. Device according to one of claims 1 to 14, the thickness of the third zone being smaller than or equal to half of the thickness of the second zone.
